# EUROPEAN PATENT SPECIFICATION

(11) **EP 3 917 215 B1**
(45) Date of publication and mention of the grant of the patent: **19.03.2025**
(21) Application number: 19911706.0
(22) Date of filing: 26.08.2019
(51) Int. Cl.: H04W 48/16, H04W 74/08, H04W 88/04, H04W 92/20

(54) **WIRELESS NODE AND WIRELESS COMMUNICATION CONTROL METHOD**
DRAHTLOSKNOTEN UND STEUERUNGSVERFAHREN FÜR DRAHTLOSKOMMUNIKATION
NOEUD SANS FIL ET PROCÉDÉ DE COMMANDE DE COMMUNICATION SANS FIL

(30) Priority: 21.01.2019 JP 2019008091
(43) Date of publication of application: 01.12.2021
(73) Proprietor: NTT DOCOMO, INC., Chiyoda-Ku Tokyo 100-6150 (JP)
(72) Inventor: HARADA, Hiroki, Tokyo 100-6150 (JP)
(74) Representative: Hoffmann Eitle
(86) International application number: PCT/JP2019/033235
(87) International publication number: WO 2020/152899

(56) References cited:
- WO-A1-2019/101203
- JP-A- 2018 046 446
- US-A1- 2013 016 841
- US-A1- 2013 301 524
- HUAWEI ET AL: "Initial access procedure for IAB", vol. RAN WG1, no. Taipei; 20190121 - 20190125, 20 January 2019 (2019-01-20), XP051592957, Retrieved from the Internet <URL:http://www.3gpp.org/ftp/Meetings%5F3GPP%5FSYNC/RAN1/Docs/R1%2D1900031%2Ezip> [retrieved on 20190120]
- ERICSSON, ST ERICSSON: "Coverage enhancements for MTC-system information", 3GPP TSG-RAN WG1 MEETING #72BIS R1-131680, vol. RAN WG1, 16 April 2013 (2013-04-16), pages 2, XP050697455

## Description

### Technical Field

The present invention relates to an Integrated Access and Backhaul node, to a wireless communication control method, and to a system.

### Background Art

Long Term Evolution (LTE) has been specified for achieving a higher data rate, lower latency, and the like in a Universal Mobile Telecommunication System (UMTS) network. Future systems of LTE have also been studied for achieving a broader bandwidth and a higher speed on the basis of LTE. Examples of the future systems of LTE include systems called LTE-Advanced (LTE-A), Future Radio Access (FRA), 5th generation mobile communication system (5G), 5G plus (5G+), Radio Access Technology (New-RAT), New Radio (NR), and the like.

For future wireless communication systems (e.g., 5G), a technique of Integrated Access and Backhaul (IAB) that unifies an access link and a backhaul link is considered (Non-Patent Literature (hereinafter referred to as "NPL") 1). In IAB, a wireless node like an IAB node forms a wireless access link with a User Equipment (UE), and also forms a wireless backhaul link with another IAB node and/or a wireless base station.

### Citation List

### Non-Patent Literature

NPL 1
   3GPP TR 38.874 V0.3.2 "3rd Generation Partnership Project; Technical Specification Group Radio Access Network; Study on Integrated Access and Backhaul (Release 15)", June 2018
NPL 2
   3GPP TSG RAN Meeting #78 RP-172290 "New SID Proposal: Study on Integrated Access and Backhaul for NR", December 2017
NPL 3
   3GPP TS38.213 V15.2.0 "3rd Generation Partnership Project; Technical Specification Group Radio Access Network; NR; Physical layer procedures for control Physical layer procedures for control (Release 15)", June 2018
NPL 4
   3GPP TS38.331 V15.2.1 "3rd Generation Partnership Project; Technical Specification Group Radio Access Network; NR; Radio Resource Control (RRC) protocol specification(Release 15)", June 2018

3GPP TSG RAN WG1 Ad-Hoc Meeting 1901 R1-1900031 (Huawei, HiSilicon) "New SID Proposal: Study on Integrated Access and Backhaul for NR", January 2019 describes agreements from the RAN1 #95 and RAN #82 meetings and describes the initial access procedure of IAB in NSA deployment and the SSB/RMSI periodicity assumed by the IAB node MT, and includes the following observations and proposals: Observation 1: The current specification can already support a longer scheduling periodicity for RMSI. Proposal 1: For initial access in NSA deployment, IAB node MT may need to ignore the barring signaling for the access UE. Proposal 2: For initial cell selection, an IAB node MT may assume that half frames with SS/PBCH blocks occur with a periodicity of 8 frames, i.e., 80ms. Proposal 3: For initial cell selection, the RMSI periodicity assumed by the IAB node MT is same to that assumed by the access UE.

US 2013/0301524 Al describes methods and apparatus providing MTC in a wireless network. A narrow bandwidth within a wide system bandwidth is allocated for communicating data related to MTC. MTC control data generated for communicating over one or more MTC control channels for an MTC UE within the narrow bandwidth is transmitted over the one or more MTC control channels. The one or more MTC channels are multiplexed with one or more legacy channels over the wide system bandwidth. Also described is a transmission mode and content of the MTC control data or other MTC data.

### Summary of Invention

### Technical Problem

However, no comprehensive study has been conducted on an initial access procedure related to the backhaul link of the wireless node like the IAB node, so that a further study is required.

One object of one aspect of the present disclosure is to provide a wireless node and a wireless communication method for optimizing the initial access procedure related to the backhaul link.

### Solution to Problem

According to one aspect of the present disclosure there is provided a Integrated Access and Backhaul, IAB, node as set out in Claim 1.

According to another aspect of the present disclosure there is provided a wireless communication control method as set out in Claim 2.

According to another aspect of the present disclosure there is provided a system as set out in Claim 3.

### Advantageous Effects of Invention

According to the present disclosure, it is possible to optimize the initial access procedure related to the backhaul link of the wireless node.

### Brief Description of Drawings

FIG. 1 illustrates a configuration example of a wireless communication system according to Background Example 1;
FIG. 2 illustrates a configuration example of IAB nodes according to Background Example1;
FIG. 3 is an explanatory view for explaining a transmission periodicity of a Synchronization Signal Block (SSB) and a System Information Block (SIB) 1 according to Background Example1;
FIG. 4 illustrates an example of a definition of a Master Information Block (MIB) according to Background Example1;
FIG. 5A illustrates an example of a definition of k_{SSB} in the case of Frequency Range (FR) 1 according to Background Example1;
FIG. 5B illustrates an example of the definition of k_{SSB} in the case of FR2 according to Background Example1;
FIG. 6 illustrates one example of initial access procedure of a UE and an IAB node according to Embodiment 1; and
FIG. 7 illustrates an example of a hardware configuration of the IAB node and the user equipment according to the present disclosure.

### Detailed Description

A wireless node described herein includes: a reception section that receives first information and second information; and a control section that controls whether or not to carry out initial access to a cell based on whether or not the second information indicates prohibition of the initial access when the first information indicates the prohibition of the initial access.

Hereinafter, a background example and an embodiment of the present disclosure will be described with reference to the accompanying drawings.

### (Background Example 1)

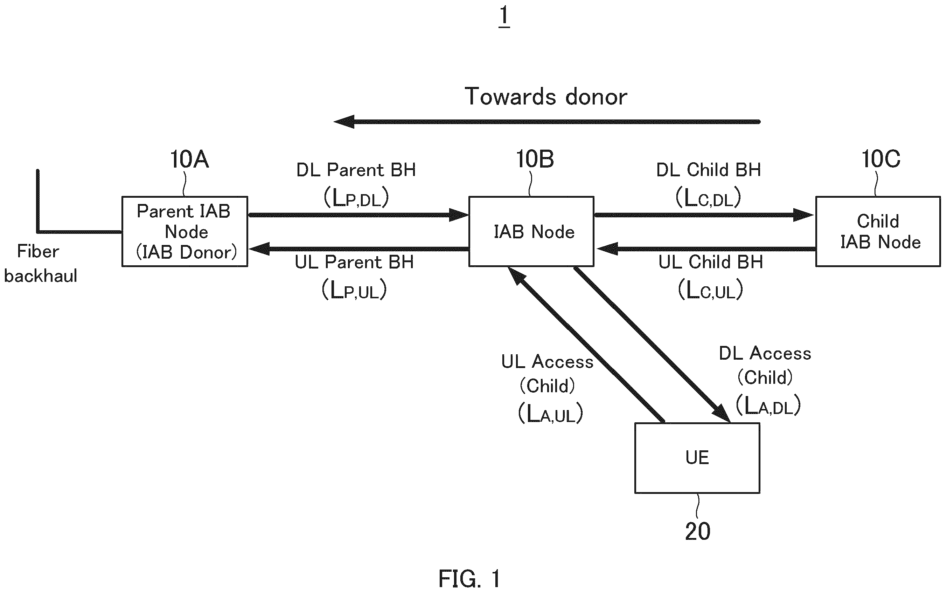

FIG. 1 illustrates a configuration example of a wireless communication system according to a Background Example 1 useful for understanding the present invention.

### <System Configuration>

Wireless communication system 1 includes a plurality of IAB nodes 10A to 10C as one example of wireless nodes, and UE 20 as one example of a user equipment. Hereinafter, like in "IAB nodes 10," only the common numeral of the reference signs may be used to describe IAB nodes 10A to 10C without distinguishing them from one another.

IAB nodes 10A to 10C are interconnected to one another by wireless communication. IAB node 10B is connected to IAB node 10A in FIG. 1. IAB node 10C is connected to IAB node 10B. Hereinafter, IAB node 10A located upstream (in other words, in the direction nearer an IAB donor) as seen from IAB node 10B is called parent IAB node 10A, and IAB node 10C located downstream (in other words, in the direction away from the IAB donor) as seen from IAB node 10B is called child IAB node 10C.

The term "parent IAB node 10A" denotes that IAB node 10A is a parent IAB node with respect to IAB node 10B, and the term "child IAB node 10C" denotes that IAB node 10C is a child IAB node with respect to IAB node 10B. In other words, IAB node 10B corresponds to a child IAB node with respect to "parent IAB node 10A," and corresponds to a parent IAB node with respect to "child IAB node 10C."

Each of IAB nodes 10A to 10C forms a cell, which is an area in which the IAB node is available to communicate wirelessly. In other words, IAB nodes 10 have a function as a base station. UE 20 positioned in the cell is available to wirelessly connect to IAB node 10 which forms the cell.

IAB node 10A may also be connected to a Core Network (CN) through a Fiber Backhaul (BH). In this case, IAB node 10A may also be called "IAB donor." Although FIG. 1 illustrates three IAB nodes 10 and one UE 20, any number of IAB nodes 10 and any number of UEs 20 may be included in wireless communication system 1. There may also be two or more parent IAB nodes with respect to one IAB node 10 and two or more child IAB nodes with respect to one IAB node 10.

Note that, "L" with its subscripts illustrated in FIG. 1 denote the following:
- "L_{P,DL}" denotes a Downlink (DL) from parent IAB node 10A to IAB node 10B;
- "L_{P,UL}" denotes a Uplink (UL) from IAB node 10B to parent IAB node 10A;
- "L_{C,DL}" denotes the DL from IAB node 10B to child IAB node 10C;
- "L_{C,UL}" denotes the UL from child IAB node 10C to IAB node 10B;
- "L_{A,DL}" denotes the DL from IAB node 10B to UE 20; and
- "L_{A,UL}" denotes the UL from UE 20 to IAB node 10B.

### <IAB Node>

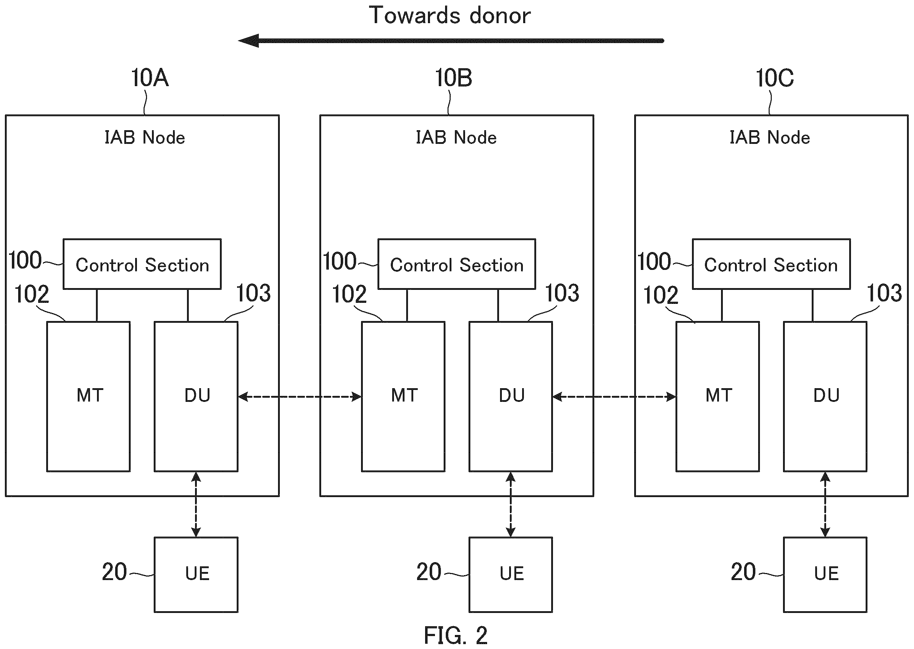

FIG. 2 illustrates a configuration example of each of IAB nodes 10.

As illustrated in FIG. 2, each of IAB nodes 10 includes control section 100, Mobile Termination (MT) 102, and Distributed Unit (DU) 103. MT 102 and DU 103 may be functional blocks. Hereinafter, a function of MT 102 may be expressed as MT without the reference sign, and a function of DU 103 may be expressed as DU without the reference sign. DU 103 may have functions corresponding to those of the base station or an extension station. One example of MT 102 may have functions corresponding to those of the user equipment.

IAB node 10B is connected to upstream IAB node (or IAB donor) 10A by MT 102. In other words, MT 102 of IAB node 10B processes connection to parent IAB node 10A.

IAB node 10B is connected to UE 20 and to the MT of downstream IAB node 10C by DU 103. In other words, DU 103 of IAB node 10B processes connection to UE 20 and to child IAB node 10C. The connection to UE 20 and/or to child IAB node 10C by DU 103 may be establishment of a Radio Resource Control (RRC) channel, for example.

Control section 100 controls MT 102 and DU 103. Operation of IAB node 10 described below may be achieved by control section 100 controlling MT 102 and DU 103. Control section 100 may also be provided with a storage section for storing therein a variety of information.

Parent IAB node 10A indicates the following time resources for a link with parent IAB node 10A (hereinafter, referred to as "parent link") from a viewpoint of MT 102 of IAB node 10B:
- DL time resource (time resource used for DL);
- UL time resource (time resource used for UL); and
- Flexible (hereinafter, referred to as "FL") time resource (time resource used for DL or UL).

IAB node 10B, from a viewpoint of DU 103 of IAB node 10B, has the following types of time resources on a link between IAB node 10B and child IAB node 10C, and/or, on a link between IAB node 10B and UE 20 (these links are hereinafter referred to as "child link"):
- DL time resource;
- UL time resource;
- FL time resource;
- Not-available (hereinafter, referred to as "NA") time resource (a resource which is not used for communication on each of the child links of the DU).

Each of the DL, UL, and FL time resources of the child link of the DU belongs to one of the following two classifications:
- Hard: the time resource corresponding to this classification is always available for the child link of the DU; and
- Soft: the availability of the time resource corresponding to this classification for the child link of the DU is controlled by parent IAB node 10A explicitly and/or implicitly.

### <Study>

New IAB node 10 is available to initially connect to existing IAB node 10 in accordance with the same initial connection procedure as that for UE 20 (see NPL 2). The connection procedure may include cell search, System Information (SI) acquisition, and random access. The initial connection may also be referred to as "initial access."

Operation of the wireless communication system includes Stand Alone (SA) operation and Non Stand Alone (NSA) operation. In the case of SA operation, UE 20 is available to communicate with an NR wireless node (base station). In the case of NSA operation, UE 20 is available to communicate with an LTE wireless node (base station) and with the NR wireless node (base station). Hereinafter, the cell formed by the NR wireless node is called "NR cell" and the cell formed by the LTE wireless node is called "LTE cell."

Conceivable requirements relevant to SA and NSA are as follows (see Section 5.1.5 of NPL 1):
- SA and NSA shall be supported for the access link;
- Both NSA and SA shall be studied for the backhaul link; and
- For NSA access and backhaul links, the study shall consider E-UTRA - NR Dual Connectivity (EN-DC).

From the above requirements, the following are assumed:
- IAB node 10 is available to use the same initial connection procedure as UE 20 for initial connection to a network; and
- IAB node 10 for NSA is also assumed.

When new IAB node 10 connects to the network (e.g., existing IAB node 10) by the same initial connection procedure as that for UE 20, existing IAB node 10 may satisfy the following requirements (A1) and (A2) in order to support the initial connection from new IAB node 10.

(A1) Synchronization Signal (SS)/Physical Broadcast Channel (PBCH) blocks are transmitted on a synchronization raster with a periodicity of 20 ms or less.

(A2) SIB1 (Remaining Minimum System Information (RMSI)) is transmitted.

However, it is assumed that, unlike normal UE 20, IAB node 10 does not move at all or moves less frequently and to a smaller distance than normal UE 20. For this reason, it is assumed that IAB node 10 switches connection targets less frequently than UE 20. It is also assumed that IAB node 10 is less constrained by the size, battery, and processing load than UE 20. It is thus assumed that the processing load for signal detection, for example, may be greater in IAB node 10 than in UE 20. Because of such differences between UE 20 and IAB node 10, SS/PBCH block transmissions and/or SIB1 transmissions to IAB node 10 do not necessarily need to be highly frequent (e.g., as frequent as those to UE 20).

In addition, the above requirements (A1) and (A2) are not necessary in the NSA operation for UEs (the operation of Primary SCell (PSCell) with EN-DC). Therefore, the above requirements (A1) and (A2) become disadvantages, such as an increase in overhead and the like, for IAB node 10 not operating in the SA operation (operating in the NSA operation). In other word, the following (B1) and/or (B2) are conceivable for IAB node 10 in the NSA operation.

(B1) The transmission periodicity of SS/PBCH blocks and/or SIB1 may be longer than 20 ms. Alternatively, the transmission periodicity may also be 20 ms or longer.

(B2) In the case where the SA operation is not performed (in other words, in the case of the NSA), part of the parameter information of the SIB1 (RMSI) (e.g., cell selection information, SI scheduling information, and/or the like) is not necessarily needed.

In order for new IAB node 10 to initially connect to the network, new IAB node 10 performs a procedure for establishing Radio Resource Control (RRC) connection, such as transmission and reception processing on a Random Access Channel (RACH) and the like. For example, when UE 20 is available to receive the SIB1 in the LTE cell in the NSA operation for UEs, UE 20 does not have to receive the SIB1 in the NR cell since it is not essential for UE 20 to receive the SIB1 in the NR cell. Meanwhile, new IAB node 10 may receive part of the information in the SIB1 in order to initially connect to the network.

### <Summary of Initial Connection Procedure for IAB Nodes>

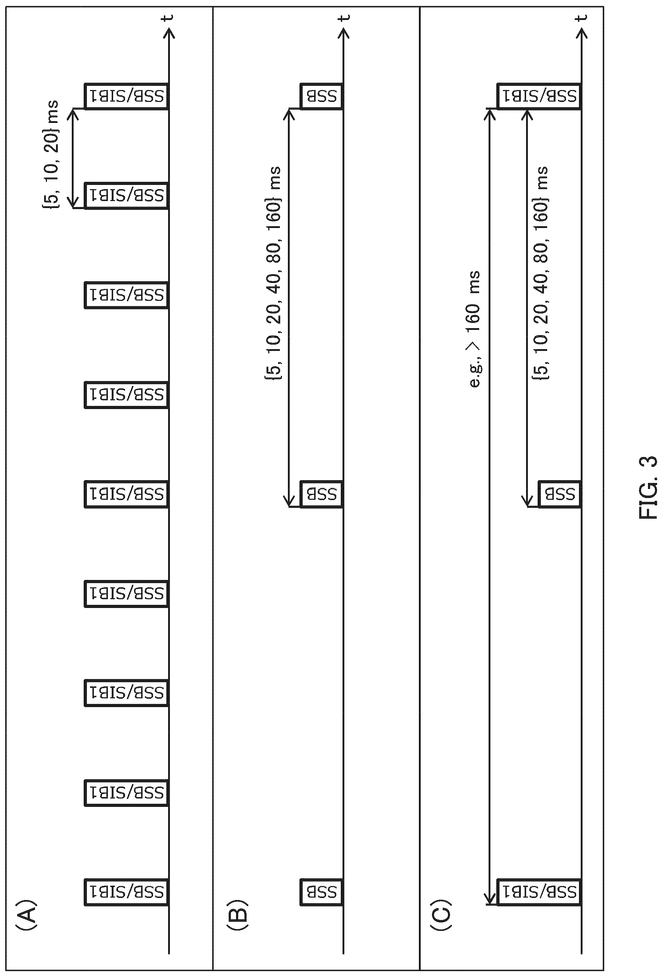

A description will be given of the initial connection procedure for IAB nodes with reference to FIG. 3. (A) in FIG. 3 illustrates an example of the transmission periodicity of the SSB and SIB 1 of the NR cell in the SA operation. (B) in FIG. 3 illustrates an example of the transmission periodicity of the SSB of the NR cell in the NSA operation. (C) in FIG. 3 illustrates an example of the transmission periodicity of the SSB and SIB1 of existing IAB node 10 in the NSA operation.

For example, the following procedures (C1) and/or (C2) may be defined for the initial connection procedure for IAB nodes, which are different from those for UEs.

(C1) New IAB node 10 detects the SS/PBCH blocks under an assumption that the transmission periodicity of the SS/PBCH blocks is 20 ms or longer, for example. In other words, new IAB node 10 assumes a transmission periodicity equal to or longer than the transmission periodicity of the SS/PBCH blocks in the NR cell in the SA operation illustrated at (A) in FIG. 3. The maximum value of the transmission periodicity may also be 160 ms or longer (see (C) in FIG. 3).

(C2) Existing IAB node 10 may transmit part of information of the SIB1 with the same periodicity (e.g., at the same timings) as the periodicity of the SS/PBCH blocks. Alternatively, existing IAB node 10 may transmit this part of information of the SIB1 with a different periodicity (e.g., once every two transmission timings for the SS/PBCH blocks) from the periodicity of the SS/PBCH blocks (see (C) in FIG. 3). The part of information of the SIB1 to be transmitted may, for example, include cellAccessRelatedInfo information, servingCellConfigCommonSIB information, and the like as the parameter information. Moreover, the part of information of the SIB1 to be transmitted does not have to include the cell selection information and/or SI scheduling information as the parameter information.

In the above (C2), existing IAB node 10 may also indicate, by using part of the information included in the PBCH (MIB), at least either information on the presence or absence of the part of information of the SIB1 described above (or, a PDCCH for scheduling of the part of information), or, information on the aforementioned transmission periodicity.

Alternatively, in the above (C2), information for indicating at least part of information on the transmission timing and/or periodicity of the part of information of the SIB1 described above (or, the PDCCH for scheduling of the part of information) may be fixed (defined) in specifications. For example, it may be defined that the highest X bits (X is an integer equal to or greater than one) of System Frame Number (SFN) indicates such information.

According to this initial connection procedure for IAB nodes, it is possible to reduce the overhead of a signal transmitted by existing IAB node 10 for the initial connection of new IAB node 10, so as to enhance the spectral efficiency, since the transmission periodicity becomes longer and/or the amount of information to be transmitted decreases for this signal.

### <Details of Initial Connection Procedure for IAB Nodes>

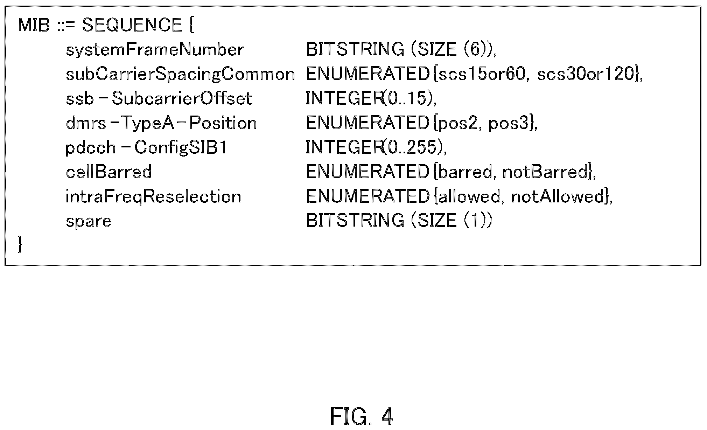

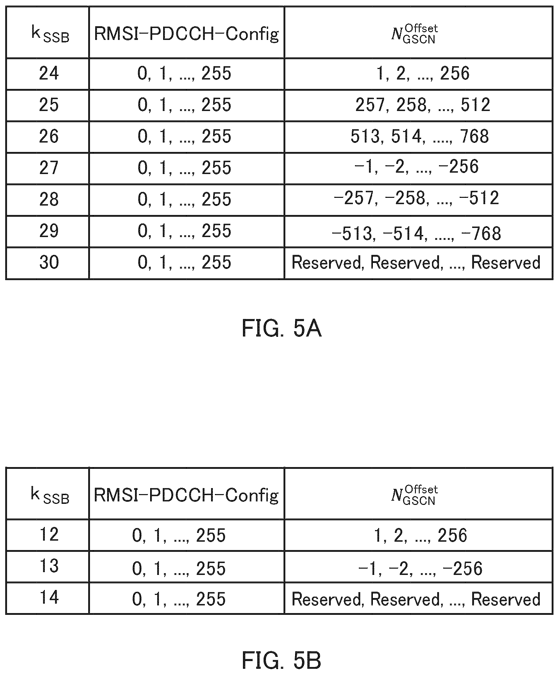

Next, the initial connection procedure for IAB nodes described above will be described in detail with reference to FIGS. 4, 5A, and 5B. FIG. 4 illustrates an example of the definition of the MIB. FIG. 5A illustrates an example of the definition of the k_{SSB} in the case of Frequency Range (FR) 1. FIG. 5B illustrates an example of the definition of the k_{SSB} in the case of FR2. FR1 may be from 450 MHz to 6.0 GHz, and FR2 may be from 24.25 GHz to 52.6 GHz.

In the initial connection procedure for UEs, UE 20 assumes that the transmission periodicity of the SS/PBCH blocks during the initial connection is 20 ms (see Section 4.1 of NPL 3).

In the initial connection procedure for IAB nodes as compared to this, IAB node 10 may assume that the transmission periodicity of the SSBs during the initial connection is longer than 20 ms described above. IAB node 10 may also assume that the transmission periodicity of the SSBs is any one of 40 ms, 80 ms, and 160 ms.

In the initial connection procedure for UEs, UE 20 determines presence or absence of a SIB1 transmission on the basis of a configuration of ssb-SubcarrierOffset (k_{SSB}) (see Section 4.1 of NPL 3). The ssb-SubcarrierOffset (k_{SSB}) is used for the determination by UE 20 of the presence or absence of the SIB1 transmission, and is used for indication of a subcarrier offset between the SSB and the SIB1. In this respect, in particular, UE 20 determines that a control resource set for Type0-PDCCH Common Search Space is present if k_{SSB} ≤ 23 for FR1, or UE 20 determines that the control resource set for Type0-PDCCH Common Search Space is absent if k_{SSB} > 23 for FR1 (see FIG. 5A). Meanwhile, UE 20 determines that the control resource set for Type0-PDCCH Common Search Space is present if k_{SSB} ≤ 11 for FR2, or UE 20 determines that the control resource set for Type0-PDCCH Common Search Space is absent if k_{SSB} > 11 for FR2 (see FIG. 5B). The presence of the control resource set for Type0-PDCCH Common Search Space corresponds to the presence of the SIB1 transmission, and the absence of control resource set for Type0-PDCCH Common Search Space corresponds to the absence of the SIB1 transmission.

In the initial connection procedure for IAB nodes, the following option (D1) or (D2) may be defined.

(D1) In the initial connection procedure for IAB nodes, IAB node 10 recognizes (or determines) the presence or absence of the SIB 1 transmission by the same method as in the initial connection procedure for UEs. In other words, IAB node 10 determines that the SIB 1 is present if k_{SSB} ≤ 23 for FR1, or IAB node 10 determines that the SIB1 is absent if k_{SSB} > 23 for FR1 (see FIG. 5A). Meanwhile, IAB node 10 determines that the SIB is present if k_{SSB} ≤ 11 for FR2, or IAB node 10 determines that the SIB1 is absent if k_{SSB} > 11 for FR2 (see FIG. 5B). However, in the case of NSA operation, existing IAB node 10 indicates information ("barred") indicative of prohibition of interpretation to UE 20 in order to prevent UE 20 having received the information (MIB) for the IAB node from erroneously interpreting that the SIB1 is present. For example, existing IAB node 10 configures a parameter value "barred" in parameter information "cellBarred" of the MIB illustrated in FIG. 4, and indicates it. Thus, IAB node 10 determines the presence or absence of the SIB1 by the aforementioned method even when the parameter value "cellBarred" of the MIB is the parameter value "barred."

(D2) In the initial connection procedure for IAB nodes, IAB node 10 recognizes (or determines) the presence or absence of the SIB1 transmission by a method different from the above method in the initial connection procedure for UEs. For example, a reserved bit of the PBCH is used, and new interpretations of the other bits of the PBCH in the case where the reserved bit is used are defined. Next, a description will be given of a particular example of such (D2). Hereinbelow, an example of the interpretations for each information of the MIB illustrated in FIG. 4 in the case of such (D2) is described.

### <ssb-SubcarrierOffset>

In the initial connection procedure for IAB nodes, among values of k_{SSB} which allow UE 20 to interpret that the SIB1 is absent, information (value) which does not affect the operation of UE 20 is indicated in ssb-SubcarrierOffset which is one element of parameter information of the MIB illustrated in FIG. 4. For example, k_{SSB}=30 is indicated in the case of FR1, or k_{SSB}=14 is indicated in the case of FR2. Here, the reason for setting k_{SSB} to "30" or "14" is because these values are Reserved and do not affect the operation of UE 20 as illustrated in FIGS. 5A and 5B. UE 20 thus interprets that the SIB1 is absent as described above since k_{SSB}=30 > 23 in the case of FR1 or k_{SSB}=14 > 11 in the case of FR2.

### <spare>

In the initial connection procedure for IAB nodes, a value allowing interpretation that the SIB1 for IAB node 10 is present is indicated in spare, which is one element of parameter information of the MIB illustrated in FIG. 4. For example, bit "1" is indicated in spare. Alternatively, without using the spare bit, it is interpreted that the SIB1 for the IAB node is present, when ssb-SubcarrierOffset has a specific value (e.g., 30 or 14).

When the presence or absence of SIB1 for the IAB node is indicated using ssb-SubcarrierOffset, the presence or absence of SIB1 for the IAB node is indicated using the value of Reserved as described above. In this case, the subcarrier offset between the SSB and the SIB1 indicated in ssb-SubcarrierOffset in the initial connection procedure for UEs is not indicated in the initial connection procedure for IAB nodes. Thus, when the presence or absence of SIB1 for the IAB node is indicated using ssb-SubcarrierOffset, the subcarrier offset between the SSB and the SIB1 may be indicated by another method. For example, the subcarrier offset between the SSB and the SIB1 may be indicated by pdcch-ConfigSIB1.

### <pdcch-ConfigSIB1>

In the initial connection procedure for IAB nodes, at least one of the SSB-SIB1 subcarrier offset and a PDCCH CORESET/search space configuration (PDCCH configuration) is indicated in pdcch-ConfigSIB 1, which is one element of parameter information of the MIB illustrated in FIG. 4. One example is described below.

In the case of FR1, 5 bits among all 8 bits of pdcch-ConfigSIB 1 are used for indication of the subcarrier offset between the SSB and the SIB1, and the remaining 3 bits are used for indication of the PDCCH configuration of the SIB1 for the IAB node. In the case of FR2, 4 bits among all the 8 bits of pdcch-ConfigSIB1 are used for indication of the subcarrier offset between the SSB and the SIB1, and the remaining 4 bits are used for indication of the PDCCH configuration of the SIB1 for the IAB node.

The PDCCH configuration may include at least one of information on the periodicity of SIB1 PDCCH for the IAB node, information on the timing of SIB1 PDCCH for the IAB node, information on the time-frequency resource location (location relative to the SSB) of SIB1 PDCCH for the IAB node, and information on a CORESET resource configuration. Information indicated by each code point may be different depending on at least one of Subcarrier Spacing (SSB SCS), SIB1 SCS, FR1 or FR2, and minimum channel bandwidth of a band, or a combination of two or more thereof. For example, a table may be defined for each combination of SCSs or for each minimum channel bandwidth.

### <SubCarrierSpacingCommon>

In the initial connection procedure for IAB nodes, the SIB1 SCS is indicated in a normal way in SubCarrierSpacingCommon, which is one element of parameter information of the MIB illustrated in FIG. 4.

### <Modification>

Although the above descriptions have been given in relation to an example where IAB node 10 and UE 20 are distinguished from each other, the present background example is not limited to this example. In other words, IAB node 10 and UE 20 may be treated equally without being distinguished. For example, UE 20 instead of new IAB node 10 may connect to existing IAB node 10 (or IAB donor 10A). In other words, the wireless node may be any one of IAB node 10, IAB donor 10A, and UE 20, or may also be other than IAB node 10, IAB donor 10A, and UE 20. For example, the wireless node may also be expressed as a terminal, a wireless station, a relay node, or the like.

Additionally or alternatively, although the above descriptions have been given in relation to an example where the access link and the backhaul link are distinguished from each other, the present background example is not limited to this example. For example, a wireless link between IAB node 10 and UE 20 may also be one example of the backhaul link. In addition, the wireless link between IAB nodes 10 may also be one example of the access link. The terms "access link" and/or "backhaul link" described above are various examples of the wireless link. For example, the terms "access link" and/or "backhaul link" described above may also be expressed as a sidelink and the like.

### <Summary of Background Example 1>

In Background Example 1, the wireless node (e.g., IAB node) includes: a reception section that receives information used for initial connection to another wireless node in a first cell; and a control section that controls the initial connection on the basis of the information, in which the control section controls reception of the information based on a periodicity equal to or longer than a periodicity defined for a user equipment in a second cell concerning transmission of the information.

This configuration makes it possible to optimize the initial connection procedure related to the backhaul link of the wireless node.

### (Embodiment 1)

### <Study>

As in the descriptions for above Background Example1, the case where IAB node 10 initially connects to the network (e.g., existing IAB node) at a frequency for the NSA operation for UE 20 will be studied. In this case, on the supposition that the same method as in the initial connection at a frequency for the SA operation is used, the transmission periodicity of the SSB or RMSI may be assumed to be longer than 20 ms which is the transmission periodicity for UE 20.

Since the aforementioned frequency is used for the NSA operation, it is required to support the initial connection of IAB node 10 while blocking the initial connection of UE 20. To achieve this, it is conceivable that MT 102 of IAB node 10 ignores indication of the parameter information "cellbarred" of the MIB illustrated in FIG. 4.

As understood, when MT 102 of IAB node 10 ignores the indication of the parameter information "cellbarred" of the MIB, the initial connection of MT 102 of IAB node 10 is required to be controlled by a method other than the parameter information "cellbarred" of the MIB (e.g., the initial connection is required to be blocked as needed). A description will thus be given for Embodiment 1 on a control method for the initial connection of MT 102 of IAB node 10.

### <Control Method for Initial Connection of IAB Node>

MT 102 of IAB node 10 obtains the SIB1 (or RMSI) even when the parameter value "barred" of the parameter information "cellbarred" of the MIB is indicated in the initial connection. Then, IAB node 10 performs the initial connection in that cell (or at the frequency) when the parameter value "barred" for MT 102 of IAB node 10 is not indicated explicitly or implicitly by the SIB1. Meanwhile, IAB node 10 does not perform the initial connection in that cell (or at the frequency) when such a parameter value "barred" is indicated explicitly or implicitly by the SIB1. This operation of IAB node 10 may be achieved by the following (E1), (E2), or (E3), for example.

(E1) InformationElement (IE) corresponding to the parameter information "cellbarrd" and/or "intraFreqReselection" are included in the SIB1 as new signaling for MT 102 of IAB node 10. The parameter information "intraFreqReselection" is a parameter value for controlling cell selection or cell reselection for intra-frequency cells.

(E2) IAB node 10 determines, based on the presence or absence of other signaling for MT 102 of IAB node 10, whether or not IAB node 10 is implicitly "barred." For example, MT 102 of IAB node 10 may determine whether or not IAB node 10 is implicitly "barred," based on whether or not the SIB1 includes a RACH configuration, which is configuration information on the random access for MT 102 of IAB node 10. For example, when the SIB1 includes the configuration information on the random access, IAB node 10 may determine that IAB node 10 is "notBarred." Meanwhile, when the SIB1 does not include the configuration information on the random access, IAB node 10 may determine that IAB node 10 is "barred."

(E3) IAB node 10 may determine, based on the presence or absence of signaling for MT 102 of another IAB node 10, whether or not IAB node 10 is implicitly "barred." For example, when the signaling corresponding to "barred" for MT 102 of the other IAB node 10 is detected, IAB node 10 may determine itself to be implicitly "barred." Meanwhile, when the signaling corresponding to "barred" for MT 102 of the other IAB node 10 is not detected, IAB node 10 may determine itself to be implicitly "notbarred."

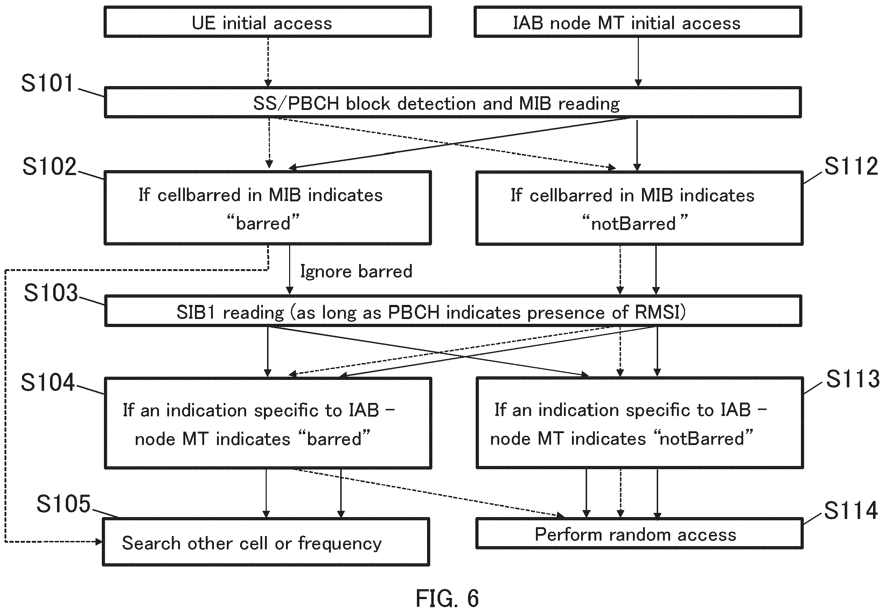

Next, the above content will further be described with reference to FIG. 6.

To begin with, the initial connection of MT 102 of IAB node 10 is described. MT 102 of IAB node 10 detects the SS/PBCH block and MIB (S101).

When the parameter value of the parameter information "cellbarred" of the obtained MIB indicates "barred" (S102), IAB node 10 ignores this parameter value "barred," and detects the SIB1 (S103). IAB node 10 may perform this SIB1 detection when the PBCH indicates the presence of RMSI. Then, when the implicit or explicit indication for MT 102 of IAB node 10 in the SIB1 indicates the parameter value "barred" (S104), MT 102 of IAB node 10 searches another cell or frequency (S105). Meanwhile, when the implicit or explicit indication in the SIB1 indicates the parameter value "notBarred," MT 102 of IAB node 10 carries out the initial connection (e.g., random access) (S114).

When the parameter value of the parameter information "cellbarred" of the obtained MIB indicates "notBarred" (S112), IAB node 10 detects the SIB1 (S103). IAB node 10 may perform this SIB1 detection when the PBCH indicates the presence of RMSI.

Then, when the implicit or explicit indication for MT 102 of IAB node 10 in the SIB1 indicates the parameter value "barred" (S104), MT 102 of IAB node 10 searches another cell or frequency (S105). Meanwhile, when the implicit or explicit indication in the SIB1 indicates the parameter value "notBarred" (S113), MT 102 of IAB node 10 carries out the initial connection (e.g., random access) (S114).

Next, the initial connection of UE 20 is described. UE 20 detects the SS/PBCH block and MIB (S101).

When the parameter value of the parameter information "cellbarred" of the obtained MIB indicates "barred" (S102), UE 20 searches another cell or frequency (S105).

When the parameter value of the parameter information "cellbarred" of the obtained MIB indicates "notBarred" (S112), UE 20 detects the SIB1 (S103). UE 20 may perform this SIB1 detection when the PBCH indicates the presence of RMSI. Then, UE 20 carries out the initial connection (e.g., random access). In other words, UE 20 carries out the initial connection (S114) irrespective of which of the parameter values "barred" (S104) and "notBarred" (S113) is indicated by the implicit or explicit indication for MT 102 of IAB node 10 in the SIB1.

According to the configuration and processing described above, wireless communication system 1 is available to control permission and/or blocking of the initial connection of MT 102 of IAB node 10 at the frequency for the NSA operation for UE 20. The term "permission" may also be replaced with another term, such as "carrying out" or "approval." The term "blocking" may also be replaced with another term, such as "stopping," "prohibition," "refusal," or "suppression."

### <Summary of Embodiment 1>

In Embodiment 1, the wireless node (e.g., IAB node 10) includes: a reception section (e.g., MT 102) that receives first information (e.g., MIB) and second information (e.g., SIB); and a control section (e.g., control section 100) that controls whether or not to carry out initial access to a cell based on whether or not the second information indicates prohibition (e.g., "barred") of the initial access when the first information indicates the prohibition of the initial access.

This configuration makes it possible to optimize the initial connection procedure related to the backhaul link of the wireless node.

Background example and embodiments of the present disclosure have been described above.

### <Hardware Configuration and/or the like>

Note that the block diagrams used to describe the embodiments illustrate blocks on the basis of functions. These functional blocks (constituent sections) are implemented by any combination of hardware and/or software. A means for implementing the functional blocks is not particularly limited. That is, the functional blocks may be implemented by one physically and/or logically coupled apparatus. Two or more physically and/or logically separated apparatuses may be directly and/or indirectly (for example, via wires and/or wirelessly) connected, and the plurality of apparatuses may implement the functional blocks.

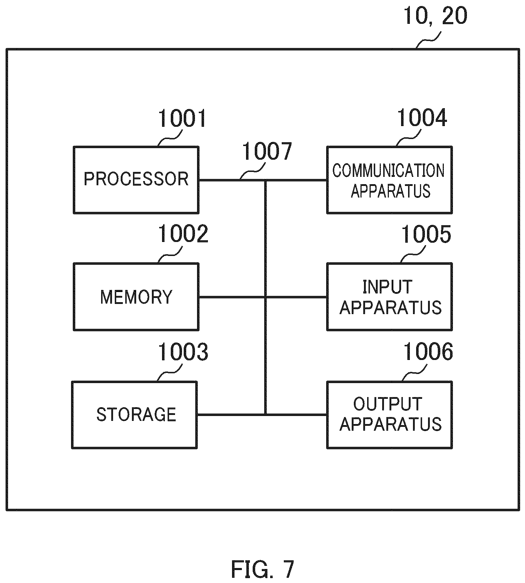

For example, IAB node 10, UE 20, and the like according to an embodiment of the present invention may function as a computer that executes processing of a wireless communication method of the present invention. FIG. 7 illustrates one example of a hardware configuration of an IAB node 10 and UE 20 according to one embodiment of the present invention. IAB node 10 and UE 20 described above may be physically constituted as a computer apparatus including processor 1001, memory 1002, storage 1003, communication apparatus 1004, input apparatus 1005, output apparatus 1006, bus 1007, and the like.

Note that the term "apparatus" in the following description can be replaced with a circuit, a device, a unit, or the like. The hardware configurations of IAB node 10 and UE 20 may include one apparatus or a plurality of apparatuses illustrated in the drawings or may not include part of the apparatuses.

The functions of IAB node 10 and UE 20 are implemented by predetermined software (program) loaded into hardware, such as processor 1001, memory 1002, and the like, according to which processor 1001 performs the arithmetic and controls communication performed by communication apparatus 1004 or reading and/or writing of data in memory 1002 and storage 1003.

Processor 1001 operates an operating system to entirely control the computer, for example. Processor 1001 may be composed of a central processing unit (CPU) including an interface with peripheral apparatuses, a control apparatus, an arithmetic apparatus, a register, and the like. For example, control section 100, MT 102, DU 103, and the like described above may be implemented by processor 1001.

Processor 1001 reads a program (program code), a software module, and data from storage 1003 and/or communication apparatus 1004 to memory 1002 and performs various types of processing according to the program (program code), the software module, and data. As the program, a program for causing the computer to perform at least a part of the operation described in the embodiments is used. For example, control section 100 may be implemented by a control program stored in memory 1002 and operated by processor 1001, and the other functional blocks may also be implemented in the same way. While it has been described that the various types of processing as described above are performed by one processor 1001, the various types of processing may be performed by two or more processors 1001 at the same time or in succession. Processor 1001 may be implemented by one or more chips. Note that the program may be transmitted from a network through a telecommunication line.

Memory 1002 is a computer-readable recording medium and may be composed of, for example, at least one of a Read Only Memory (ROM), an Erasable Programmable ROM (EPROM), an Electrically Erasable Programmable ROM (EEPROM), and a Random Access Memory (RAM). Memory 1002 may be called as a register, a cache, a main memory (main storage apparatus), or the like. Memory 1002 can save a program (program code), a software module, and the like that can be executed to carry out the wireless communication method according to an embodiment of the present invention.

Storage 1003 is a computer-readable recording medium and may be composed of, for example, at least one of an optical disk such as a Compact Disc ROM (CD-ROM), a hard disk drive, a flexible disk, a magneto-optical disk (for example, a compact disc, a digital versatile disc, or a Blue-ray (registered trademark) disc), a smart card, a flash memory (for example, a card, a stick, or a key drive), a floppy (registered trademark) disk, and a magnetic strip. Storage 1003 may also be called as an auxiliary storage apparatus. The storage medium as described above may be, for example, a database, a server, or other appropriate media including memory 1002 and/or storage 1003.

Communication apparatus 1004 is hardware (transmission and reception device) for communication between computers through a wired and/or wireless network and is also called as, for example, a network device, a network controller, a network card, or a communication module. For example, MT 102, DU 103, and the like described above may be implemented by communication apparatus 1004.

Input apparatus 1005 is an input device (for example, a keyboard, a mouse, a microphone, a switch, a button, or a sensor) that receives input from the outside. Output apparatus 1006 is an output device (for example, a display, a speaker, or an LED lamp) which makes outputs to the outside. Note that input apparatus 1005 and output apparatus 1006 may be integrated (for example, a touch panel).

The apparatuses, such as processor 1001 and memory 1002, are connected by bus 1007 for communication of information. Bus 1007 may be composed of a single bus or by buses different among the apparatuses.

Furthermore, IAB node 10 and user equipment 20 may include hardware, such as a microprocessor, a digital signal processor (DSP), an Application Specific Integrated Circuit (ASIC), a Programmable Logic Device (PLD), and a Field Programmable Gate Array (FPGA), and the hardware may implement part or all of the functional blocks. For example, processor 1001 may be implemented by at least one of these pieces of hardware.

### <Notification and Signaling of Information>

A method of the notification of information is not limited to the aspects or embodiments described in the present specification, and the information may be notified by another method. For example, the notification of information may be carried out by one or a combination of physical layer signaling (for example, Downlink Control Information (DCI) and Uplink Control Information (UCI)), higher layer signaling (for example, Radio Resource Control (RRC) signaling, Medium Access Control (MAC) signaling, notification information (Master Information Block (MIB), and System Information Block (SIB))), and other signals. The RRC signaling may be called an RRC message and may be, for example, an RRC connection setup message, an RRC connection reconfiguration message, or the like.

### <Applied System>

The aspects and embodiments described herein may be applied to a system using Long Term Evolution (LTE), LTE-Advanced (LTE-A), SUPER 3G, IMT-Advanced, 4G, 5G, Future Radio Access (FRA), W-CDMA (registered trademark), GSM (registered trademark), CDMA2000, Ultra Mobile Broadband (UMB), IEEE 802.11 (Wi-Fi), IEEE 802.16 (WiMAX), IEEE 802.20, Ultra-WideBand (UWB), Bluetooth (registered trademark), or other appropriate systems and/or to a next-generation system extended on the basis of the above systems.

### <Processing Procedure and the like>

The orders of the processing procedures, the sequences, the flow charts, and the like of the aspects and embodiments described herein may be changed as long as there is no contradiction. For example, elements of various steps are presented in exemplary orders in the methods described herein, and the methods are not limited to the presented specific orders.

### <Operation of Base Station>

Specific operations which are described in the specification as being performed by the base station may sometimes be performed by an upper node depending on the situation. It is obvious that various operations performed for communication with a terminal in a network including one network node or a plurality of network nodes including the base station can be performed by the base station and/or a network node other than the base station (examples include, but not limited to, MME or S-GW). Although there is one network node other than the base station in the case illustrated above, a plurality of other network nodes may be combined (for example, MME and S-GW).

### <Direction of Input and Output>

Information and the like (* see the item of "information and signal") may be output from the higher layer (or lower layer) to the lower layer (or higher layer). The information, the signals, and the like may be input and output through a plurality of network nodes.

### <Handling of Input and Output Information and the like>

The input and output information and the like may be saved in a specific place (for example, memory) or may be managed by a management table. The input and output information and the like can be overwritten, updated, or additionally written. The output information and the like may be deleted. The input information and the like may be transmitted to another apparatus.

### <Determination Method>

The determination may be made on the basis of a value expressed by one bit (zero or one), on the basis of a Boolean value (true or false), or on the basis of comparison with a numerical value (for example, comparison with a predetermined value).

### <Variations and the like of Aspects>

The aspects and embodiments described herein may be independently used, may be used in combination, or may be switched and used along the execution. Furthermore, notification of predetermined information (for example, notification indicating "it is X") is not limited to explicit notification, and may be performed implicitly (for example, by not notifying the predetermined information).

The present invention is defined by the claims.

### (Meaning and Interpretation of Terms)

### <Software>

Regardless of whether the software is called as software, firmware, middleware, a microcode, or a hardware description language or by another name, the software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, the instruction, and the like may be transmitted and received through a transmission medium. For example, when the software is transmitted from a website, a server, or another remote source by using a wired technique, such as a coaxial cable, an optical fiber cable, a twisted pair, and a digital subscriber line (DSL), and/or a radio technique, such as an infrared ray, a radio wave, and a microwave, the wired technique and/or the radio technique is included in the definition of the transmission medium.

### <Information and Signals>

The information, the signals, and the like described herein may be expressed by using any of various different techniques. For example, data, instructions, commands, information, signals, bits, symbols, chips, and the like that may be mentioned throughout the entire description may be expressed by one or an arbitrary combination of voltage, current, electromagnetic waves, magnetic fields, magnetic particles, optical fields, and photons.

Note that the terms described herein and/or the terms necessary for understanding the present specification may be replaced with terms with the same or similar meaning. For example, the channel and/or the symbol may be a signal. The signal may be a message. The component carrier (CC) may be called as a carrier frequency, a cell, or the like.

### <"System" and "Network">

The terms "system" and "network" used herein can be interchangeably used.

### <Names of Parameters and Channels>

The information, the parameters, and the like described herein may be expressed by absolute values, by values relative to predetermined values, or by other corresponding information. For example, radio resources may be indicated by indices.

The names used for the parameters are not limited in any respect. Furthermore, the numerical formulas and the like using the parameters may be different from the ones explicitly disclosed in the present specification. Various channels (for example, PUCCH and PDCCH) and information elements (for example, TPC) can be identified by any suitable names, and various names assigned to these various channels and information elements are not limited in any respect.

### <Base Station>

The base station can accommodate one cell or a plurality of (for example, three) cells (also called sector). When the base station accommodates a plurality of cells, the entire coverage area of the base station can be divided into a plurality of smaller areas, and each of the smaller areas can provide a communication service on the basis of a base station subsystem (for example, small base station for indoor, remote radio head (RRH)). The term "cell" or "sector" denotes part or all of the coverage area of the base station and/or of the base station subsystem that provides the communication service in the coverage. Furthermore, the terms "base station", "eNB", "cell", and "sector" can be interchangeably used in the present specification. The base station may be called as a fixed station, a NodeB, an eNodeB (eNB), an access point, a femto cell, a small cell, or the like.

### <Mobile Station>

The mobile station may be called, by those skilled in the art, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or by some other appropriate terms.

### <Meaning and Interpretation of Terms>

As used herein, the term "determining" may encompass a wide variety of actions. For example, "determining" may be regarded as judging, calculating, computing, processing, deriving, investigating, looking up (for example, looking up in a table, a database or another data structure), ascertaining and the like. Furthermore, "determining" may be regarded as receiving (for example, receiving information), transmitting (for example, transmitting information), inputting, outputting, accessing (for example, accessing data in a memory) and the like. Also, "determining" may be regarded as resolving, selecting, choosing, establishing and the like. That is, "determining" may be regarded as a certain type of action related to determining.

### < "Connected" and "Coupled">

The terms "connected" and "coupled" as well as any modifications of the terms mean any direct or indirect connection and coupling between two or more elements, and the terms can include cases in which one or more intermediate elements exist between two "connected" or "coupled" elements. The coupling or the connection between elements may be physical or logical coupling or connection or may be a combination of physical and logical coupling or connection. When the terms are used in the present specification, two elements can be considered to be "connected" or "coupled" to each other by using one or more electrical wires, cables, and/or printed electrical connections or by using electromagnetic energy, such as electromagnetic energy with a wavelength of a radio frequency domain, a microwave domain, or an optical (both visible and invisible) domain that are non-limiting and non-inclusive examples.

### <Reference Signal>

The reference signal can also be abbreviated as an RS and may also be called as a pilot depending on the applied standard.

### <Meaning of "on the basis of">

The description "on the basis of" used herein does not mean "on the basis only of," unless otherwise specifically stated. In other words, the description "on the basis of" can mean both of "on the basis of only" and "on the basis of at least."

### <Terms "first" and "second">

Any reference to elements by using the terms "first," "second," and the like that are used in the present specification does not generally limit the quantities of or the order of these elements. The terms can be used as a convenient method of distinguishing between two or more elements in the present specification. Therefore, reference to first and second elements does not mean that only two elements can be employed there, or that the first element has to precede the second element somehow.

### <"Means">

The "means" in the configuration of each apparatus described above may be replaced with "section," "circuit," "device," or the like.

### <Open-ended Format>

The terms "including," "comprising," and modifications of these terms are intended to be inclusive just like the term "having," as long as the terms are used in the present specification or the appended claims. Furthermore, the term "or" used herein or the appended claims is not intended to be an exclusive or.

### <Time Unit and Radio Frame Configuration such as TTI>

The radio frame may be constituted by one frame or a plurality of frames in the time domain. The one frame or each of the plurality of frames may be called a subframe in the time domain. The subframe may be further constituted by one slot or a plurality of slots in the time domain. The slot may be further constituted by one symbol or a plurality of symbols (OFDM symbol, SC-FDMA symbol, or the like) in the time domain. The radio frame, the subframe, the slot, and the symbol indicate time units in transmitting signals. The radio frame, the subframe, the slot, and the symbol may be called by other corresponding names. For example, in the LTE system, the base station creates a schedule for assigning radio resources to each mobile station (such as frequency bandwidth that can be used by each mobile station and/or transmission power). The minimum time unit of scheduling may be called as a Transmission Time Interval (TTI). For example, one subframe, a plurality of continuous subframes, or one slot may be called as a TTI. The resource block (RB) is a resource assignment unit in the time domain and the frequency domain, and the resource block may include one subcarrier or a plurality of continuous subcarriers in the frequency domain. In addition, the resource block may include one symbol or a plurality of symbols in the time domain, and may have a length of one slot, one subframe, or one TTI. One TTI and one subframe may be constituted by one resource block or a plurality of resource blocks. The structure of the radio frame is illustrative only, and the number of subframes included in the radio frame, the number of slots included in the subframe, the numbers of symbols and resource blocks included in the slot, and the number of subcarriers included in the resource block can be changed in various ways.

### <Maximum Transmit Power>

The "maximum transmit power" described in the present examples may mean a maximum value of the transmit power, but is not limited to the maximum value of the transmit power and may also be the nominal UE maximum transmit power or the rated UE maximum transmit power.

### <Article>

When articles, such as "a," "an," and "the" in English, are added by translation in the entire disclosure, the articles include plural forms unless otherwise clearly indicated by the context.

### Industrial Applicability

One aspect of the present disclosure is useful for wireless communication systems.

### Reference Signs List

1 Wireless communication system
10A, 10B, 10C IAB node
20 User equipment
100 Control section
102 MT
103 DU

## Claims

1. An Integrated Access and Backhaul, IAB, node (10: 10A), comprising:
a Mobile Termination, MT section, (102) configured to receive a master information block, and a system information block 1, SIB1; and
a control section (100) configured to ignore, in the master information block, a first parameter for indicating that initial access to a cell is barred and to determine whether or not the initial access to the cell is barred based on a second parameter, in the SIB 1, indicating whether or not the initial access to the cell is barred.

2. A wireless communication control method, comprising:
receiving, by an Integrated Access and Backhaul, IAB, node, a master information block;
ignoring, by the IAB node, in the master information block, a first parameter for indicating that initial access to a cell is barred;
receiving, by the IAB node, a system information block 1, SIB1; and
determining, by the IAB node, whether or not the initial access to the cell is barred based on a second parameter, SIB1, indicating whether or not the initial access to the cell is barred.

3. A system (1), comprising:
the IAB node (10) according to claim 1; and
a second IAB node (10); and
the second IAB node is configured to transmit the master information block, and the SIB1.

## Patentansprüche

1. Integrierter Zugangs- und Backhaul-, IAB, Knoten (10: 10A), umfassend:
einen Mobilabschluss-, MT-, Abschnitt (102), der so konfiguriert ist, dass er einen Masterinformationsblock und einen Systeminformationsblock 1, SIB1, empfängt; und
einen Steuerabschnitt (100), der so konfiguriert ist, dass er in dem Masterinformationsblock einen ersten Parameter ignoriert, der anzeigt, dass der anfängliche Zugang zu einer Zelle gesperrt ist, und dass er auf der Grundlage eines zweiten Parameters in dem SIB1, der anzeigt, ob der anfängliche Zugang zu der Zelle gesperrt ist oder nicht, bestimmt, ob der anfängliche Zugang zu der Zelle gesperrt ist oder nicht.

2. Steuerungsverfahren für Drahtloskommunikation, umfassend:
Empfangen eines Masterinformationsblocks durch einen integrierten Zugangs- und Backhaul-, IAB, Knoten;
Ignorieren eines ersten Parameters durch den IAB-Knoten in dem Masterinformationsblock, der anzeigt, dass der anfängliche Zugang zu einer Zelle gesperrt ist;
Empfangen, durch den IAB-Knoten, eines Systeminformationsblocks 1, SIB1; und
Bestimmen, durch den IAB-Knoten, ob der anfängliche Zugang zu der Zelle gesperrt ist oder nicht, auf der Grundlage eines zweiten Parameters, SIB1, der anzeigt, ob der anfängliche Zugang zu der Zelle gesperrt ist oder nicht.

3. System (1), umfassend:
den IAB-Knoten (10) nach Anspruch 1; und
einen zweiten IAB-Knoten (10); und
wobei der zweite IAB-Knoten so konfiguriert ist, dass er den Masterinformationsblock und den SIB1 überträgt.

## Revendications

1. Nœud (10 : 10A) IAB, Integrated Access and Backhaul, comprenant :
une section (102) de terminaison mobile, MT, configurée pour recevoir un bloc d'informations maître, et un bloc d'informations système 1, SIB1 ; et
une section (100) de commande configurée pour ignorer, dans le bloc d'informations maître, un premier paramètre pour indiquer que l'accès initial à une cellule est interdit et pour déterminer si l'accès initial à la cellule est interdit ou non sur la base d'un second paramètre, dans le SIB1, indiquant si l'accès initial à la cellule est interdit ou non.

2. Procédé de commande de communication sans fil, comprenant :
la réception, par un nœud IAB, Integrated Access and Backhaul, d'un bloc d'informations maître ;
l'ignorance, par le nœud IAB, dans le bloc d'information maître, d'un premier paramètre pour indiquer que l'accès initial à une cellule est interdit ;
la réception, par le nœud IAB, d'un bloc d'informations système 1, SIB1 ; et
la détermination, par le nœud IAB, si l'accès initial à la cellule est interdit ou non sur la base d'un second paramètre, SIB1, indiquant si l'accès initial à la cellule est interdit ou non.

3. Système (1), comprenant :
le nœud (10) IAB selon la revendication 1 ; et
un second nœud (10) IAB ; et
le second nœud IAB est configuré pour transmettre le bloc d'informations maître, et le SIB1.
